# EUROPEAN PATENT SPECIFICATION

(11) **EP 2 646 735 B1**
(45) Date of publication and mention of the grant of the patent: **21.01.2015**
(21) Application number: 12773396.2
(22) Date of filing: 31.08.2012
(51) Int. Cl.: F17C 1/00, B60T 13/26

(54) **SECURITY SYSTEM FOR A PNEUMATIC ACCUMULATOR AND PLANT USING SAID SYSTEM**
SICHERHEITSSYSTEM FÜR EINEN PNEUMATISCHEN AKKUMULATOR UND ANLAGE MIT EINEM SOLCHEN SYSTEM
SYSTÈME DE SÉCURITÉ POUR UN ACCUMULATEUR PNEUMATIQUE ET INSTALLATION UTILISANT LEDIT SYSTÈME

(30) Priority: 02.09.2011 IT RM20110456
(43) Date of publication of application: 09.10.2013
(73) Proprietor: Aero Sekur S.p.A., 04011 Aprilia (LT) (IT)
(72) Inventor: GIOVANGROSSI, Giacomo, 04011 Aprilia (LT) (IT)
(74) Representative: Tiburzi, Andrea
(86) International application number: PCT/IT2012/000264
(87) International publication number: WO 2013/030857

(56) References cited:
- FR-A- 1 120 119
- FR-A- 1 310 140
- US-A- 2 092 392
- US-A- 2 540 676
- US-A1- 2002 096 223

## Description

The present invention relates to a security system for a pneumatic accumulator and plant using said system.

More specifically, the invention concerns a security system for a pneumatic accumulator designed and made to allow the operation of any pneumatic system, in which the accumulator is installed, even in case of damage.

In the following, the description will be directed to accumulators or pneumatic systems installed in the braking systems of heavy vehicles, but it is clear that the same should not be considered limited to this specific use.

As it is well known, at present pneumatic accumulators are used in many technology fields. For example, they are used as activation system in compressed air braking systems of heavy vehicles, such as lorries, trucks, trailers and the like.

The plants, and in particular, for example, compressed air braking systems for vehicles, comprise a pneumatic accumulator, which is typically a tank for compressed air, a pump, connected by an inlet duct of the compressed air to said tank and an outlet duct, connected to said tank. Furthermore, said plant comprises an activation valve, arranged on said outlet duct and interposed between said tank and said brake system.

By opening said activation valve, the air, compressed in said tank, passes from said tank to said braking system, allowing the activation of the system and the slowing of the vehicle.

A technical problem with compressed air systems according to the prior art is that, in case of damage of the tank or ducts, for example due to the breakage of a connecting flange of said accumulator or tank and said ducts, or a crack or a hole on the surface of the tank, the system is useless. Furthermore, if the vehicle is moving, it may also have considerable risks for the safety of the driver and the transported load.

An example of braking system pressure accumulator containing a bladder is known from patent US 2540676.

Another example of braking system pressure accumulator comprising a main and a spare pressure accumulator is known from patent FR 1120119.

Other examples are known from patents and patent applications US 2092392, US2002/096223 and FR 1310140.

In view of the above, it is, therefore, an object of the present invention to provide a security system for a pneumatic accumulator which overcome the limits of the accumulators of the prior art, allowing a plant to operate even in case of damage.

These and other results are obtained according to the invention with a flexible pneumatic bladder preferably contained within the tank, or within the accumulator, under pressure.

It is therefore a specific object of the present invention a security system for a pneumatic accumulator, said high pressure gas pneumatic accumulator being connectable with a pump and with a pneumatic apparatus by means of, respectively, a first and second connecting duct, said system being characterized in that it comprises a pneumatic bladder for containing high pressure gas, flow distribution means connected with said first and second connecting duct to said pneumatic accumulator and said pneumatic bladder, said flow distribution means being able to pass, through a command, from a first operating position, in which said flow distribution means connect said first and second connecting duct with said pneumatic accumulator, to a second operating position, in which said flow distribution means connect first and second connecting duct with said pneumatic bladder, so as to inflate said pneumatic bladder with gas and to functionally replace said pneumatic accumulator.

Always according to the invention, comprises said system could comprise a detection device of the internal pressure of said pneumatic accumulator, and a control unit operatively connected with said detection device and said flow distribution means, said control unit being capable to transmit said command to cause the passage of said flow distribution means from said first to said second operating position, when said detection device detects a pressure of the gas contained in said accumulator below a preset threshold.

Still according to the invention, said flow distribution means could comprise a flow distribution valve connected with said first and second connecting duct, a first inlet duct and a first outlet duct, connected with said pneumatic accumulator and said flow distribution valve, and a second inlet duct and a second outlet duct connected with said pneumatic bladder and said flow distribution valve.

Further according to the invention, said pneumatic bladder could be placed within said pneumatic accumulator.

Advantageously according to the invention, said pneumatic bladder could have dimensions such that it occupies, when unfolded, substantially the entire internal volume of said pneumatic accumulator.

Always according to the invention, said pneumatic bladder could comprise two layers of material, a first inner layer, and a second reinforcement outer layer, made as fabric, provided with reinforcement tapes.

Still according to the invention, said reinforcement tapes could be made of Kevlar^{®}.

Further according to the invention, said pneumatic apparatus could be a brake device of a vehicle.

It is further a specific object of the present invention a pneumatic plant comprising a pneumatic accumulator, a pump for maintaining the gas contained in said pneumatic accumulator at a presettable pressure, a pneumatic apparatus, that can be activated by the compressed gas contained in said pneumatic accumulator, a first duct connected with said pump, a second duct connected with said pneumatic apparatus, and an activation valve, arranged along said second duct, said pneumatic plant being characterized in that it comprises a security system as defined above.

Always according to the invention, said central control unit could be operatively connected with said activation valve and with said flow distribution valve.

The present invention will be now described, for illustrative but not limitative purposes, according to its preferred embodiments, with particular reference to the figures of the enclosed drawings, wherein:
figure 1 shows a scheme of a security system for a pneumatic accumulator according to the present invention;
figure 2 shows the scheme according to figure 1, in which the security system is in emergency state.

In the various figures, similar parts will be indicated by the same reference numbers.

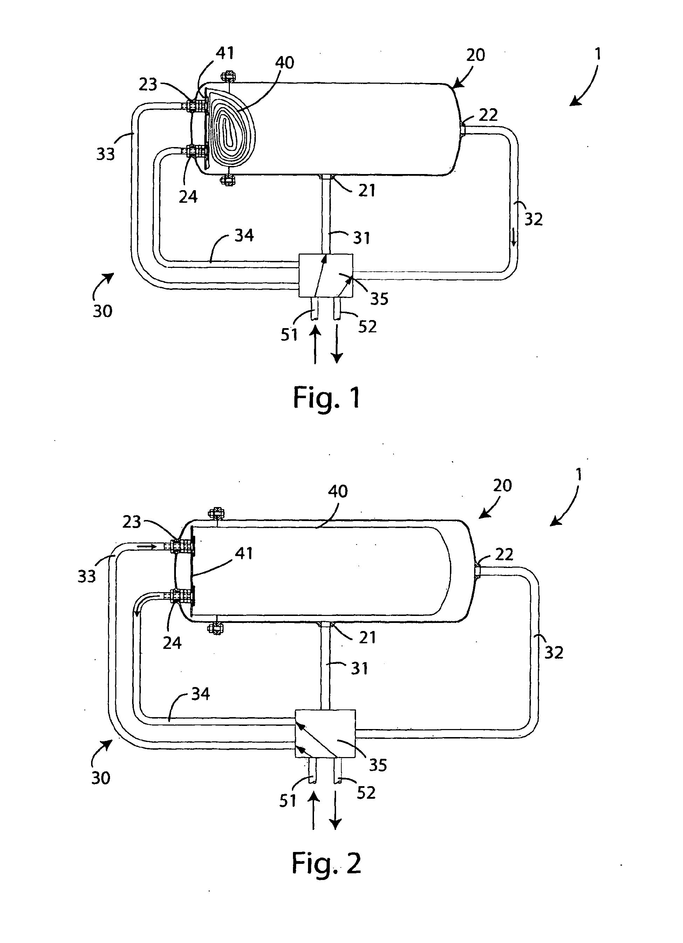

Referring to figure 1, a security system 1 for a pneumatic accumulator 20 can be seen.

Said pneumatic accumulator 20, or tank, comprises a first inlet opening 21, a first outlet opening 22, a second inlet opening 23 and a second outlet opening 24.

Said security system 1 also comprises flow distribution means 30 and a pneumatic bladder 40.

Said flow distribution means 30 comprise a flow distribution valve 35, a first inlet duct 31, connected with said first inlet opening 21 of said accumulator 20, a first outlet duct 32, connected with said first outlet 22 of said accumulator 20, a second inlet duct 33, which passes through said second inlet opening 23 of said accumulator 20, and a second outlet duct 34, passing through said second outlet opening 24 of said accumulator 20.

Said flow distribution valve 35, to which said first inlet duct 31, said first outlet duct 32, said second inlet duct 33 and said second outlet duct 34 are connected. Said flow distribution valve 35 is connected, in its turn, also with the compressed air pump, not shown in the figure, by means of a first connecting duct 51, and with the pneumatic apparatus, which uses the compressed air, for example, in this case, a braking device of a heavy vehicle, by means of a second connecting duct 52.

Said flow distribution valve 35 is capable of passing, following a command, from a first operating position, wherein said first inlet duct 31 is connected with said first connecting duct 51 and said first outlet duct 32 is connected with said second connecting duct 52, to a second operative position, in which said second inlet duct 33 is connected with said first connecting duct 51 and said second outlet duct 34 is connected with said second connecting duct 52.

Along said second connecting duct 52 an activation valve is usually provided, not shown in the figure.

Said pneumatic bladder 40 is arranged folded inside said pneumatic accumulator 20, so as to occupy as little space as possible, and preferably fixed to a support plate 41. Said pneumatic bladder 40 is connected with said second inlet duct 33 and with said second outlet duct 34. It has to be considered that said second inlet duct 33 and said second outlet duct 34 do not communicate with the inner volume of said pneumatic accumulator 20, but only with the pneumatic bladder 40.

Said pneumatic bladder 40 provides double-layer walls, a first inner layer, and a reinforcement external second layer (restraint), realized as a fabric, provided with reinforcing belts, preferably made of Kevlar^{®}, for allowing said pneumatic bladder 40 to resist high internal pressures, which can reach 10 - 15 Bar, as said pneumatic bladder 40 must have the same structural strength of said accumulator 20 under pressure, in order to resist the pressure exerted by the gas without relying on the structural strength of the accumulator 20 itself.

The system 1 also comprises a device for detecting the internal pressure of said pneumatic accumulator 20, not visible in the figures, and a control unit (also not shown in the figures) of said flow distribution means 30, and in particular of said flow distribution valve 35 (the operation of said control unit will be better explained in the following). Said control unit is operatively connected with said flow distribution valve 35 and with said internal pressure detection device of said pneumatic accumulator 20.

The operation of the security system 1 described above is as follows.

In normal operating conditions, system 1 is in the state of figure 1, in which said flow distribution valve 35 is in said first operating position, then said pump maintains the gas within said pneumatic accumulator 20, for example compressed air, contained at a preset pressure, and said activation valve is normally closed.

When the plant is operated, said activation valve is opened, the pressurized gas flow comes out from said accumulator 20 (see the arrows), passing through said first outlet duct 32, reaching the braking device. The pump is activated to maintain the gas pressure over a preset operating threshold. By closing the activation valve, it returns to the initial state.

If the accumulator 20 were damaged, for example if it were pierced, or has a crack, then there would be a sudden drop of internal pressure of said pneumatic accumulator 20, so as to actuate said internal pressure detection device of said pneumatic accumulator 20, when said pressure falls below a preset threshold. Said pressure detection device transmits, then, an alert signal to said control unit, which activates, by means of an appropriate command, generally an electrical signal, said flow distribution valve 35, causing it to pass from said first operating position to said second operating position. In this way, the gas coming from said pump is conveyed into said pneumatic bladder 40, (see the direction of the arrows) which unfolds and is inflated, to fill substantially the whole inner volume of said pneumatic accumulator 20, so as to functionally replace said accumulator 20, which, as said, has been bypassed by said flow distribution valve 35. In other words, said pneumatic bladder 40 functionally replaces said pneumatic accumulator 20. Then, due to the opening of said activation valve, the gas compressed in the pneumatic bladder 40 by means of said pump, passes through said second outlet duct 34, said flow distribution valve 35 and said second connecting duct 52, so as to activate said pneumatic braking device.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Security system (1) for a pneumatic accumulator (20), said high pressure gas pneumatic accumulator (20) being connectable with a pump and with a pneumatic apparatus by means of, respectively, a first (51) and second (52) connecting duct, said system (1) being **characterized in that** it comprises
a pneumatic bladder (40) for containing high pressure gas,
flow distribution means (30) connected with said first (51) and second (52) connecting duct to said pneumatic accumulator (20) and said pneumatic bladder (40), said flow distribution means (30) being able to pass, through a command, from a first operating position, in which said flow distribution means (30) connect said first (51) and second (52) connecting duct with said pneumatic accumulator (20), to a second operating position, in which said flow distribution means (30) connect first (51) and second (52) connecting duct with said pneumatic bladder (40), so as to inflate said pneumatic bladder (40) with gas and to functionally replace said pneumatic accumulator (20).

2. System (1) according to claim 1, **characterized in that** it comprises
a detection device of the internal pressure of said pneumatic accumulator (20), and
a control unit operatively connected with said detection device and said flow distribution means (30), said control unit being capable to transmit said command to cause the passage of said flow distribution means (30) from said first to said second operating position, when said detection device detects a pressure of the gas contained in said accumulator (20) below a preset threshold.

3. System (1) according to anyone of the preceding claims, **characterized in that** said flow distribution means (30) comprise
a flow distribution valve (35) connected with said first (51) and second (52) connecting duct,
a first inlet duct (31) and a first outlet duct (32), connected with said pneumatic accumulator (20) and said flow distribution valve (35), and
a second inlet duct (33) and a second outlet duct (34) connected with said pneumatic bladder (40) and said flow distribution valve (35).

4. System (1) according to anyone of the preceding claims, **characterized in that** said pneumatic bladder (40) is placed within said pneumatic accumulator (20).

5. System (1) according to claim 4, **characterized in that** said pneumatic bladder (40) has dimensions such that it occupies, when unfolded, substantially the entire internal volume of said pneumatic accumulator (20).

6. System (1) according to anyone of the preceding claims, **characterized in that** said pneumatic bladder (40) comprises two layers of material, a first inner layer, and a second reinforcement outer layer, made as fabric, provided with reinforcement tapes.

7. System (1) according to claim 6, **characterized in that** said reinforcement tapes are made of Kevlar^{®}.

8. System (1) according to anyone of the preceding claims, **characterized in that** said pneumatic apparatus is a brake device of a vehicle.

9. Pneumatic plant comprising
a pneumatic accumulator (20),
a pump for maintaining the gas contained in said pneumatic accumulator (20) at a presettable pressure,
a pneumatic apparatus, that can be activated by the compressed gas contained in said pneumatic accumulator (20),
a first duct (51) connected with said pump,
a second duct (52) connected with said pneumatic apparatus, and
an activation valve, arranged along said second duct (52),
said pneumatic plant being **characterized in that** it comprises a security system (1) as defined in anyone of claims 1 - 8.

10. Plant according to claim 9, **characterized in that** said central control unit is operatively connected with said activation valve and with said flow distribution valve (35).

## Patentansprüche

1. Sicherheitssystem (1) für einen pneumatischen Akkumulator (20), wobei der pneumatische Akkumulator für Hochdruckgas (20) mit einer Pumpe über eine erste Verbindungsröhre (51) und mit einer pneumatischen Vorrichtung über eine zweite Verbindungsröhre (52) verbindbar ist, das System (1) ist **dadurch gekennzeichnet, dass** es umfasst:
eine pneumatische Blase (40) zur Aufnahme von Hochdruckgas,
Strömungsverteilungsmittel (30), die mit der ersten Verbindungsröhre (51) und der zweiten Verbindungsröhre (52) mit dem pneumatischen Akkumulator (20) und der pneumatischen Blase (40) verbunden sind, wobei die Strömungsverteilungsmittel (30) in der Lage sind, durch einen entsprechenden Befehl, von einer ersten Betriebsposition, in der die Strömungsverteilungsmittel (30) die erste (51) und zweite (52) Verbindungsröhre mit dem pneumatischen Akkumulator (20) verbinden, in eine zweite Betriebsposition überzugehen, in der die Strömungsverteilungsmittel (30) die erste (51) und zweite (52) Verbindungsröhre mit der pneumatischen Blase (40) verbinden, um so die pneumatische Blase (40) mit Gas aufzublasen und funktional den pneumatischen Akkumulator (20) zu ersetzen.

2. System (1) nach Anspruch 1, **dadurch gekennzeichnet, dass** es umfasst
eine Detektionsvorrichtung des internen Drucks des pneumatischen Akkumulators (20), und
eine Steuerungseinheit, die operativ mit der Detektionsvorrichtung und den Strömungsverteilungsmitteln (30) verbunden ist, wobei die Steuerungseinheit in der Lage ist, den Befehl zu übertragen, um die Strömungsverteilungsmittel (30) zu veranlassen, von der ersten in die zweite Betriebsposition überzugehen, wenn die Detektionsvorrichtung einen Druck des in dem Akkumulator (20) aufgenommenen Gases unterhalb eines vorgegebenen Schwellenwerts detektiert.

3. System (1) nach einem der vorhergehenden Ansprüche, **dadurch gekennzeichnet, dass** die Strömungsverteilungsmittel (30) umfassen
ein Strömungsverteilungsventil (35), das mit der ersten (51) und der zweiten (52) Verbindungsröhre verbunden ist,
eine erste Einlassröhre (31) und eine erste Auslassröhre (32), die mit dem pneumatischen Akkumulator (20) und dem Strömungsverteilungsventil (35) verbunden sind, und
eine zweite Einlassröhre (33) und eine zweite Auslassröhre (34), die mit der pneumatischen Blase (40) und dem Strömungsverteilungsventil (35) verbunden sind.

4. System (1) nach einem der vorhergehenden Ansprüche, **dadurch gekennzeichnet, dass** die pneumatische Blase (40) innerhalb des pneumatischen Akkumulators (20) platziert ist.

5. System (1) nach Anspruch 4, **dadurch gekennzeichnet, dass** die pneumatische Blase solche Abmessungen aufweist, dass sie im entfalteten Zustand im Wesentlichen das gesamte interne Volumen des pneumatischen Akkumulators (20) belegt.

6. System (1) nach einem der vorhergehenden Ansprüche, **dadurch gekennzeichnet, dass** die pneumatische Blase (40) zwei Materialschichten aufweist, eine erste innere Schicht und eine zweite äußere Verstärkungsschicht, die aus einem Gewebe hergestellt ist und mit Verstärkungsbändern versehen ist.

7. System (1) nach Anspruch 6, **dadurch gekennzeichnet, dass** die Verstärkungsbänder aus Kevlar^{®} hergestellt sind.

8. System (1) nach einem der vorhergehenden Ansprüche, **dadurch gekennzeichnet, dass** die pneumatische Vorrichtung eine Bremsvorrichtung eines Fahrzeugs ist.

9. Pneumatische Anlage, umfassend
einen pneumatischen Akkumulator (20),
eine Pumpe, um das in dem pneumatischen Akkumulator (20) befindliche Gas auf einem vorgegebenen Druck zu halten,
eine pneumatische Vorrichtung, die durch das komprimierte Gas, das sich in dem pneumatischen Akkumulator (20) befindet, aktiviert werden kann,
eine erste Röhre (51), die mit der Pumpe verbunden ist,
eine zweite Röhre (52), die mit der pneumatischen Vorrichtung verbunden ist, und
ein Aktivierungsventil, das längs der zweiten Röhre (52) angeordnet ist, wobei das pneumatische Aggregat **dadurch gekennzeichnet ist, dass** es ein Sicherheitssystem (1) gemäß einem der Ansprüche 1 bis 8 umfasst.

10. Anlage nach Anspruch 9, **dadurch gekennzeichnet, dass** die zentrale Steuerungseinheit operativ mit dem Aktivierungsventil und mit dem Strömungsverteilungsventil (35) verbunden ist.

## Revendications

1. Système de sécurité (1) pour un accumulateur pneumatique (20), ledit accumulateur de gaz à haute pression (20) pouvant être raccordé à une pompe et à un appareil pneumatique, respectivement à l'aide d'un premier (51) et d'un second (52) conduit de raccordement, ledit système (1) étant **caractérisé en ce qu'**il comprend :
une vessie pneumatique (40) pour contenir un gaz à haute pression,
des moyens de distribution de débit (30) reliés auxdits premier (51) et second (52) conduits de raccordement audit accumulateur pneumatique (20) et à ladite vessie pneumatique (40), lesdits moyens de distribution de débit (30) étant aptes à passer, par l'intermédiaire d'un ordre, d'une première position de fonctionnement, dans laquelle lesdits moyens de distribution de débit (30) relient lesdits premier (51) et second (52) conduits de raccordement audit accumulateur pneumatique (20), à une seconde position de fonctionnement, dans laquelle lesdits moyens de distribution de débit (30) relient lesdits premier (51) et second (52) conduits de raccordement à ladite vessie pneumatique (40), de façon à gonfler ladite vessie pneumatique (40) en gaz et à remplacer fonctionnellement ledit accumulateur pneumatique (20).

2. Système (1) selon la revendication 1, **caractérisé en ce qu'**il comprend
un dispositif de détection de la pression interne dudit accumulateur pneumatique (20), et
une unité de commande reliée fonctionnellement audit dispositif de détection et auxdits moyens de distribution de débit (30), ladite unité de commande étant apte à transmettre ledit ordre pour faire passer lesdits moyens de distribution de débit (30) de ladite première à ladite seconde position de fonctionnement lorsque ledit dispositif de détection détecte une pression du gaz contenu dans ledit accumulateur (20) inférieure à un seuil préréglé.

3. Système (1) selon l'une quelconque des revendications précédentes, **caractérisé en ce que** lesdits moyens de distribution de débit (30) comprennent :
une soupape de distribution de débit (35) reliée auxdits premier (51) et second (52) conduits de raccordement,
un premier conduit d'admission (31) et un premier conduit de sortie (32), raccordés audit accumulateur pneumatique (20) et à ladite soupape de distribution de débit (35), et
un second conduit d'admission (33) et un second conduit de sortie (34), raccordés à ladite vessie pneumatique (40) et à ladite soupape de distribution de débit (35).

4. Système (1) selon l'une quelconque des revendications précédentes, **caractérisé en ce que** ladite vessie pneumatique (40) est placée à l'intérieur dudit accumulateur pneumatique (20).

5. Système (1) selon la revendication 4, **caractérisé en ce que** ladite vessie pneumatique (40) a des dimensions telles qu'elle occupe, à l'état déplié, sensiblement la totalité du volume interne dudit accumulateur pneumatique (20).

6. Système (1) selon l'une quelconque des revendications précédentes, **caractérisé en ce que** ladite vessie pneumatique (40) comprend deux couches de matériau, une première couche intérieure et une seconde couche extérieure de renforcement en tissu pourvu de bandes de renfort.

7. Système (1) selon la revendication 6, **caractérisé en ce que** lesdites bandes de renfort sont réalisées en Kevlar®.

8. Système (1) selon l'une quelconque des revendications précédentes, **caractérisé en ce que** ledit appareil pneumatique est un dispositif de freinage d'un véhicule.

9. Installation pneumatique comprenant :
un accumulateur pneumatique (20)
une pompe pour maintenir le gaz contenu dans ledit accumulateur pneumatique (20) à une pression préréglable,
un appareil pneumatique pouvant être activé par le gaz comprimé contenu dans ledit accumulateur pneumatique (20),
un premier conduit (51) relié à ladite pompe,
un second conduit (52) relié audit appareil pneumatique, et
une soupape d'activation, disposée le long dudit second conduit (52),
ladite installation pneumatique étant **caractérisée en ce qu'**elle comprend un système de sécurité (1) tel que défini dans l'une quelconque des revendications 1 à 8.

10. Installation selon la revendication 9, **caractérisée en ce que** ladite unité de commande centrale est fonctionnellement reliée à ladite soupape d'activation et à ladite soupape de distribution de débit (35).
